# EUROPÄISCHE PATENTSCHRIFT

(11) **EP 1 955 254 B1**
(45) Veröffentlichungstag und Bekanntmachung des Hinweises auf die Patenterteilung: **27.07.2011**
(21) Anmeldenummer: 06818674.1
(22) Anmeldetag: 20.11.2006
(51) Int. Cl.: G06K 7/00, G06K 19/00, H04L 9/00, G06K 19/073

(54) **TRAGBARER DATENTRÄGER MIT LESEGERÄT**
PORTABLE DATA STORAGE MEDIUM HAVING A READER
SUPPORT DE DONNÉES PORTABLE AVEC APPAREIL DE LECTURE

(30) Priorität: 21.11.2005 DE 102005055417
(43) Veröffentlichungstag der Anmeldung: 13.08.2008
(73) Patentinhaber: Giesecke & Devrient GmbH, 81677 München (DE)
(72) Erfinder: ROSSMADL, Alfred, 87737 Boos (DE); OJSTER, Albert, 82031 Grünwald (DE)
(74) Vertreter: Höhfeld, Jochen
(86) Internationale Anmeldenummer: PCT/EP2006/011109
(87) Internationale Veröffentlichungsnummer: WO 2007/057220

(56) Entgegenhaltungen:
- DE-A1- 4 305 571
- DE-A1- 10 250 617
- DE-A1- 19 842 920
- DE-A1- 19 950 524
- US-A- 4 918 631
- US-A- 5 955 961
- US-B2- 6 543 690

## Beschreibung

Die Erfindung betrifft ein System mit einem tragbaren Datenträger und einem Endgerät. Weiterhin betrifft die Erfindung ein Verfahren zur Ausführung einer Anwendung mit Hilfe eines tragbaren Datenträgers.

Tragbare Datenträger, insbesondere Chipkarten, können bei einer Vielzahl von Anwendungen eingesetzt werden. Von besonderer Bedeutung sind dabei Anwendungen, bei denen Sicherheitsaspekte eine Rolle spielen. Um eine Chipkarte nutzen zu können, wird in der Regel ein Chipkartenleser benötigt, mit dem die Chipkarte bei der Ausführung der Anwendung kommuniziert. Beispielsweise wird der Chipkartenleser zur Eingabe einer persönlichen Geheimzahl eines Benutzers benötigt, deren korrekte Eingabe bei vielen Anwendungen für eine Nutzung der Anwendung zwingend erforderlich ist. Um ein Ausspähen der Geheimzahl möglichst zu verhindern, muss die Eingabe der Geheimzahl in einem sicheren Umfeld erfolgen. Dementsprechend sind die Chipkartenleser bei bekannten Systemen jeweils mit einer sehr aufwendigen Elektronik und Firmware ausgestattet. Je nach der Sicherheitsklasse, für welche die Chipkartenleser freigegeben sind, können sie zusätzlich über eine Anzeige und eine Tastatur verfügen. Die Funktionalität der Firmware ist in der Regel vom jeweiligen Kartenherausgeber abhängig und muss daher jeweils an die Gegebenheiten angepasst werden. Außerdem unterliegen die Chipkartenleser einer teuren Freigabeprozedur.

Aus der US 5,955,961 ist eine Transaktionskarte mit einer Elektronik bekannt, die einen Magnetstreifen emulieren kann und dadurch mit einem Magnetkartenleser kommunizieren kann. Die Transaktionskarte weist unter anderem eine Tastatur und eine Anzeige auf. Der dargestellte Magnetstreifenleser, der nicht näher beschrieben ist, weist ebenfalls eine Tastatur und eine Anzeige auf. Weiterhin ist aus der US 5,955,961 eine Chipkarte bekannt, die eine Tastatur und eine Anzeige aufweist. Ein zugehöriger Chipkartenleser ist dort nicht beschrieben.

Die US 6,543,690 B2 offenbart einen Chipkartenleser, der einen USB-Stecker zum Anschluss des Chipkartenlesers an einen Host und eine Kontaktiereinheit zur Kontaktierung der Kontaktflächen einer Chipkarte aufweist. Der USB-Stecker und die Kontaktiereinheit sind elektrisch miteinander verbunden. Der Chipkartenleser weist keine aktiven elektronischen Komponenten auf.

Aus der DE 198 42 920 A1 ist eine Chipkarte mit einem Sensorselement und einem Spannungsversorgungselement zur autarken Gewinnung von physikalischen, chemischen, biologischen oder sonstigen Meßwerten, die zunächst auf der Chipkarte gespeichert werden, bekannt. Zum Auslesen der Meßwerte wird die Chipkarte mit einer Auswerteeinheit verbunden, die über eine Anzeige zur Darstellung der Meßwerte verfügt. Die Auswerteeinheit ist ihrerseits über eine Kabelverbindung mit einer Recheneinrichtung verbunden. Eine Anzeige von mittels der Chipkarte gezielt vorgenommenen Dateneingaben auf der Auswerteeinheit ist nicht vorgesehen.

DE 199 50 524 A1 beschreibt eine berührungssensitive Schaltanordnung zum Ein- und Ausschalten einer Kontaktlos-Chipkarte. Zugrundegelegt wird dabei das Problem des unberechtigten Auslesens einer Kontaktloskarte bzw. der nachweislich bewußten Betätigung einer solchen Karte. Die worgeschlagene Anordnung basiert auf einer mäandernden Leiterstruktur, die mit einer batteriebetriebenen Datenverarbeitungsschaltung verbunden ist, welche insbesondere eine bei Berührung durch einen Nutzer auftretende Amplituden- und/ oder Phasenänderung eines Signals in der Leiterbahnstruktur auswertet. Eine gezielte Eingabe von Daten über die Chipkarte oder eine Darstellung von solchen eingegebenen Daten sind bei der bekannten Lösung nicht möglich.

Aus der DE 43 05 571 A1 ist für Chipkarten, die via Fernabfrage ausgelesen werden können, der Vorschlag bekannt, das Lesegerät mit einem Schalter auszurüsten und eine Femabfrage nur zu gestatten, wenn der Schalter betätigt wird.

DE 102 50 617 gegen die die Ansprüche abgegrenzt wurden, offenbart eine Chipkarte mit Kontaktfeld und Kontaktlosschnittstelle, die als Bindeglied zwischen einem Handy und einem Terminal dient, um sichere Transaktionen durchzuführen. Die Karte wird dazu kontaktbehaftet dem Terminal präsentiert und kommuniziert über die Kontaktlosschnittstelle, z.B. Bluetooth mit einem Handy, über das vom Nutzer sichere Eingaben vorgenommen werden können. Die Eingaben werden am Display des Handys angezeigt. Die eingesetzte Chipkarte bietet keine Möglichkeit zur Vornahme von Dateneingaben.

Bekannt sind des weiteren Chipkarten, die selbst über eine Tastatur sowie über eine Anzeige verfügen. Eine solche Chipkarte ist beispielsweise aus der US 4,918,631 bekannt. Derartige Karten ermöglichen sichere Dateneingaben und deren Anzeige, sind aber teuer in der Herstellung und machen in der Regel eine Nutzung der Karte als kontaktbehaftete Karte unmöglich.

Der Erfindung liegt die Aufgabe zugrunde, ein System bestehend aus einem tragbaren Datenträger und einer Leseeinrichtung möglichst kostengünstig zu realisieren und dennoch einen erforderlichen Sicherheitsstandard zu gewährleisten.

c

Die Erfindung wird durch die unabhängigen Ansprüche definiert.

Vorteilhafte Ausführungsformen gehen aus den abhängigen Ansprüchen hervor.

Das erfindungsgemäße System hat den Vorteil, dass zur Erfüllung hoher Sicherheitsstandards ein sehr einfach aufgebautes und damit kostengünstiges Endgerät eingesetzt werden kann. Dabei ist es besonders vorteilhaft, die Eingabevorrichtung beim tragbaren Datenträger und die Signalvorrichtung beim Endgerät vorzusehen. Dadurch kann auf eine aufwendige Elektronik beim Eingabegerät verzichtet werden und das Endgerät zudem sehr kompakt ausgebildet werden. Außerdem kann damit die Akzeptanz beim Benutzer erhöht werden, da er für die Eingabe von gegebenenfalls vertraulichen Daten sein eigenes Gerät verwenden kann. Ein weiterer Vorteil besteht darin, dass Eingabevorrichtungen kostengünstig und in flacher sowie robuster Ausführung verfügbar sind und dadurch problemlos im tragbaren Datenträger untergebracht werden können. Signaleinrichtungen sind in der Regel empfindlicher im Hinblick auf mechanische Einwirkungen, so dass deren Anordnung im Endgerät von Vorteil ist.

Um ein Ausspähen von vertraulichen Eingabedaten zu vermeiden, ist in dem von der Signaleinrichtung des Endgeräts erzeugten Signal die bei der zugehörigen Betätigung der Eingabevorrichtung des tragbaren Datenträgers eingegebene Information vorzugsweise nicht erhalten.

Die Koppeleinrichtung des tragbaren Datenträgers kann als ein Kontaktfeld ausgebildet sein. Die Eingabevorrichtung des tragbaren Datenträgers ist bevorzugt als eine Tastatur ausgebildet, um eine Vielzahl unterschiedlicher Eingaben zu ermöglichen. Weiterhin ist es von Vorteil, wenn mit dem tragbaren Datenträger eine Datenübertragung gemäß dem USB-Standard durchführbar ist. Dies ermöglicht eine hohe Übertragungsgeschwindigkeit und eine sehr universelle Einsetzbarkeit des erfindungsgemäßen Systems. Der tragbare Datenträger in Form einer Chipkarte ist vorzugsweise als eine Chipkarte gemäß den Normen ISO 7810 und ISO/IEC 7816 ausgebildet. Chipkarten sind kostengünstig verfügbar und weisen sehr kleine Abmessungen auf, so dass sie problemlos mitgeführt werden können. Außerdem sind bei Chipkarten hohe Sicherheitsstandards etabliert.

Die Koppeleinrichtung des Endgeräts ist bevorzugt als eine Kontaktiereinheit zur berührenden Kontaktierung ausgebildet. Zur Ausbildung der Datenverbindung mit dem weiteren Gerät kann das Endgerät ein Anschlusselement, insbesondere einen USB-Stecker, aufweisen. Die Signaleinrichtung des Endgeräts kann so ausgebildet sein, dass sie ein optisch, akustisch oder taktil wahrnehmbares Signal erzeugt. Besonders vorteilhaft ist es, wenn das Endgerät ein Stützelement zum Abstützen des tragbaren Datenträgers im Bereich der Eingabevorrichtung aufweist. Durch das Stützelement kann gewährleistet werden, dass bei einer Betätigung der Eingabevorrichtung keine unzulässig hohen mechanischen Belastungen des tragbaren Datenträgers entstehen.

Beim erfindungsgemäßen Verfahren gemäß Anspruch 11 wird zum Ausführen einer Anwendung mit Hilfe eines tragbaren Datenträgers der tragbare Datenträger in Form einer Chipkarte einem Endgerät in Form eines Chipkartenlesers angenähert oder in dieses eingeführt. Über das Endgerät wird eine Datenverbindung zwischen dem tragbaren Datenträger und einem weiteren Gerät ausgebildet. Von einem Benutzer werden durch Betätigung einer Eingabevorrichtung des tragbaren Datenträgers Daten eingegeben. Bei der Betätigung der Eingabevorrichtung werden von einer Signaleinrichtung des Endgeräts vom Benutzer wahrnehmbare Signale erzeugt, durch die die Betätigung der Eingabevorrichtung quittiert wird.

Die Erfindung wird im Folgenden anhand der in der Zeichnung dargestellten Ausführungsbeispiele näher erläutert, bei denen der tragbare Datenträger jeweils als eine Chipkarte ausgebildet ist.

Es zeigen:
- Fig.1: ein erstes Ausführungsbeispiel des erfindungsgemäßen Systems in einer schematisierten perspektivischen Darstellung,
- Fig. 2: eine Variante für die Ausführung der Chipkarte in einer schematisier- ten Aufsicht,
- Fig. 3: ein zweites Ausführungsbeispiel des erfindungsgemäßen Systems in einer schematisierten Aufsicht,
- Fig. 4: das in Fig. 3 dargestellte Ausführungsbeispiel des erfindungsgemäßen Systems in einer schematisierten Seitenansicht,
- Fig. 5: ein drittes Ausführungsbeispiel des erfindungsgemäßen Systems in einer Fig. 3 entsprechenden Darstellung und
- Fig. 6: ein viertes Ausführungsbeispiel des erfindungsgemäßen Systems in einer Fig. 3 entsprechenden Darstellung.

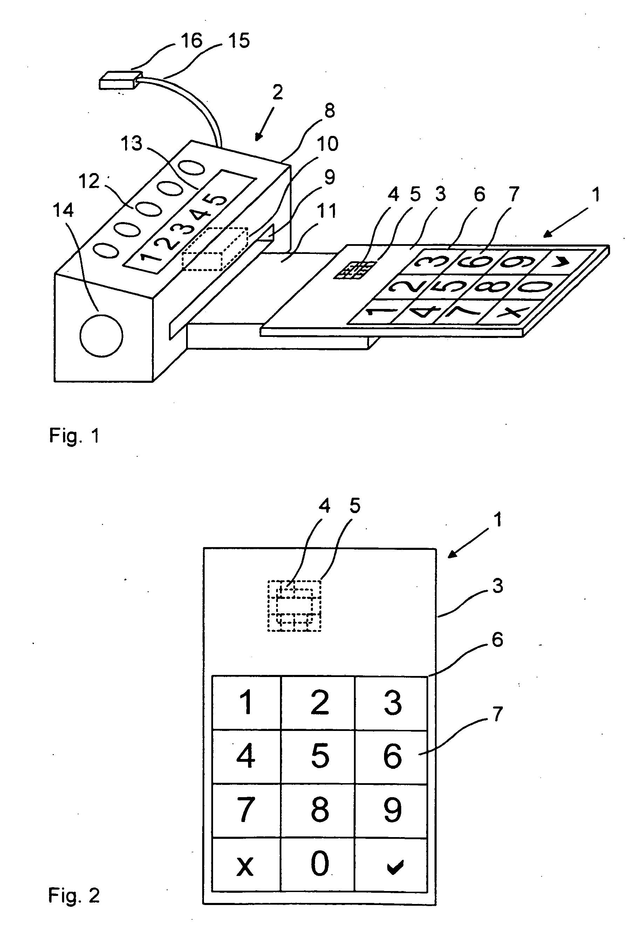

Fig.1 zeigt ein Ausführungsbeispiel des erfindungsgemäßen Systems in einer schematisierten perspektivischen Darstellung. Das erfindungsgemäße System weist eine Chipkarte 1 und einen Chipkartenleser 2 auf. Die Chipkarte 1 weist einen Kartenkörper 3 auf, in den ein integrierter Schaltkreis 4 eingebettet ist. Der integrierte Schaltkreis 4 ist mit einem Kontaktfeld 5 elektrisch leitend verbunden, das im Bereich der Oberfläche des Kartenkörpers 3 angeordnet ist und den integrierten Schaltkreis 4 verdeckt. Weiterhin ist im Bereich der Oberfläche des Kartenkörpers 3 auf der selben Seite, auf der auch das Kontaktfeld 5 angeordnet ist, eine Tastatur 6 vorgesehen und mit dem integrierten Schaltkreis 4 elektrisch leitend verbunden. Beim dargestellten Ausführungsbeispiel weist die Tastatur 6 zwölf Tasten 7 auf, die den Ziffern 0 bis 9 entsprechen und eine Taste 7 zum Bestätigen sowie eine Taste 7 zum Abbrechen einer Aktion beinhalten. Die Tasten 7 können beispielsweise als mechanische Schalter ausgebildet sein. Ebenso ist auch eine induktive Realisierung möglich, bei der ein Metallteil im Magnetfeld einer Spule bewegt wird. Weiterhin können kapazitive Tasten 7, die auf eine Berührung reagieren oder Tasten 7, die optische Effekte ausnutzen, zum Einsatz kommen. Der Kartenkörper 3 ist vorzugsweise gemäß der Norm ISO 7810 ausgebildet. Die elektrische Belegung des Kontaktfeldes 5 erfolgt bevorzugt gemäß der Norm ISO/ IEC 7816.

Der Chipkartenleser 2 weist ein Gehäuse 8 mit einem Kartenschlitz 9 zum Einführen der Chipkarte 1 auf. Oberhalb des Kartenschlitzes 9 ist innerhalb des Gehäuses 8 eine Kontaktiereinheit 10 zur berührenden Kontaktierung des Kontaktfelds 5 der Chipkarte 1 angeordnet. Die Kontaktiereinheit 10 ist in Fig. 1 lediglich symbolisch dargestellt. Unmittelbar unterhalb des Kartenschlitzes 9 steht ein flachstückartiges Stützelement 11 senkrecht vom Gehäuse 8 ab. Das Gehäuse 8 und auch das Stützelement 11 sind vorzugsweise aus Kunststoff gefertigt. Weiterhin sind in das Gehäuse 8 mehrere Leuchtdioden 12, eine alphanumerische Anzeige 13 und ein Lautsprecher 14 eingelassen. Die Leuchtdioden 12, die alphanumerische Anzeige 13 und der Lautsprecher 14 können jeweils auch alternativ zueinander vorgesehen sein. Schließlich weist der Chipkartenleser 2 noch ein Anschlusskabel 15 mit einem USB-Stecker 16 auf, der in eine USB-Buchse eines nicht figürlich dargestellten Computers oder eines sonstigen Geräts eingesteckt werden kann. USB steht dabei für Universal Serial Bus.

Zur Durchführung einer Anwendung mit der Chipkarte 1, beispielsweise einer Transaktion im Rahmen des Homebanking, wird der USB-Stecker 16 in die USB-Buchse des Computers eingesteckt und dadurch der Chipkartenleser 2 betriebsbereit gemacht. Über den USB-Stecker 16 wird der Chipkartenleser 2 mit der nötigen Betriebsspannung versorgt und es wird eine Datenverbindung zum Computer hergestellt. Die Chipkarte 1 wird in den Kartenschlitz 9 des Chipkartenlesers 2 eingeführt und dabei das Kontaktfeld 5 der Chipkarte 1 von der Kontaktiereinheit 10 berührend kontaktiert. Über diese Kontaktierung wird der Chipkarte 1 die benötigte Betriebsspannung zugeführt, so dass die Chipkarte 1 kurze Zeit später betriebsbereit ist. Außerdem wird eine Datenverbindung zur Chipkarte 1 ausgebildet, so dass eine Datenübertragung zwischen der Chipkarte 1 und dem Computer, in den der USB-Stecker 16 eingesteckt ist, möglich ist. Die Datenverbindung kann beispielsweise über die gemäß der Norm ISO/IEC 7816 mit C4 und C8 bezeichneten Kontakte des Kontaktfelds 5 der Chipkarte 1 hergestellt werden. Hierzu ist die Chipkarte 1 so ausgebildet, dass der integrierte Schaltkreis 4 über eine USB-Schnittstelle verfügt und die Kontakte C4 und C8 an die USB-Schnittstelle angeschlossen sind. Die Datenübertragung kann direkt zwischen dem Computer und der USB-Schnittstelle der Chipkarte 1 erfolgen, so dass der Chipkartenleser 2 lediglich der Weiterleitung der Daten dient und nicht aktiv an der Kommunikation beteiligt ist. Für diese direkte Kommunikation mit der Chipkarte 1 ist auf dem Computer ein Treiber installiert, durch den die Chipkarte 1 eingebunden wird. Der Computer kann zum Beispiel über das Internet mit einem entsprechenden Leistungsanbieter, wie beispielsweise einer Bank, verbunden sein.

Für die Durchführung der Anwendung erforderliche Benutzereingaben, beispielsweise die Eingabe einer persönlichen Geheimzahl, können mit Hilfe der Tastatur 6 der Chipkarte 1 vorgenommen werden. Wegen der Nähe der Tastatur 6 zum integrierten Schaltkreis 4 sind mit der Tastatur 6 vorgenommene Eingaben sehr gut vor einem Ausspähen geschützt, so dass seitens des Benutzers kaum Vorbehalte gegen eine Eingabe von vertraulichen Informationen über die Tastatur 6 seiner Chipkarte 1 bestehen dürften. Während der Eingabe liegt die Chipkarte 1 großflächig auf dem Stützelement 11 des Chipkartenlesers 2 auf, so dass beim Betätigen der Tastatur 6 der Chipkarte 1 keine unzulässigen Biegebeanspruchungen der im Kartenschlitz 9 angeordneten Chipkarte 1 auftreten.

Jede Betätigung der Tastatur 6 der Chipkarte 1 wird vom Chipkartenleser 2 quittiert, so dass eine sehr zuverlässige Eingabe möglich ist. Durch die Quittierung erhält der Benutzer jeweils eine Rückmeldung, dass er eine der Tasten 7 der Tastatur 6 betätigt hat. Um die Vertraulichkeit der eingegebenen Daten zu wahren geht aus der Rückmeldung in der Regel jedoch nicht hervor, welche Taste 7 jeweils betätigt wurde. Die für die Quittierung benötigte Information wird dem Chipkartenleser 2 über das Kontaktfeld 5 der Chipkarte 1 übermittelt. Insbesondere kann diese Information über den Kontakt C7 übermittelt werden, an den gemäß der Norm ISO/IEC 7816 eine serielle Schnittstelle der Chipkarte 1 angeschlossen ist. Die Quittierung kann beispielsweise so gestaltet sein, dass bei jeder Betätigung der Tastatur 6 eine für diesen Zweck vorgesehene Leuchtdiode 12 des Chipkartenlesers 2 aufleuchtet. Ebenso ist es auch möglich die Betätigung der Tastatur 6 jeweils auf der alphanumerischen Anzeige 13 des Chipkartenlesers 2 sichtbar zu machen, wobei zur Wahrung der Vertraulichkeit der Eingabe vorzugsweise nicht das Zeichen angezeigt wird, das mit der Tastatur 6 eingegeben wurde. Bei einer weiteren Variante wird bei jeder Betätigung der Tastatur 6 der Chipkarte 1 der Lautsprecher 14 des Chipkartenlesers 2 angesteuert, so dass dieser jeweils einen Ton ausgibt. Außerdem besteht die Möglichkeit, auf eine Betätigung der Tastatur 6 der Chipkarte 1 hin eine taktile Rückmeldung zu geben. Dies kann zum Beispiel mittels eines Vibrationsmotors des Chipkartenlesers 2 geschehen, der jeweils für eine kurze Zeit in Betrieb genommen wird.

Mit den Leuchtdioden 12 können auch andere Aktivitäten als eine Betätigung der Tastatur 7 angezeigt bzw. Informationen ausgegeben werden. Beispielsweise kann mit den Leuchtdioden 12 angezeigt werden, ob die Chipkarte 1 in den Kartenschlitz 9 eingeführt ist, ob die Geheimzahl korrekt eingegeben wurde usw.

Auf die vorstehend beschriebene Weise lässt sich mit dem in Fig. 1 dargestellten Chipkartenleser 2 die vom Zentralen Kreditausschuss definierte Sicherheitsklasse III erreichen.

Aufgrund ihrer Normmaße kann die Chipkarte 1 nicht nur im Rahmen des erfindungsgemäßen Systems eingesetzt werden, sondern beispielsweise auch bei einem beliebigen Terminal für Normkarten, das für die in der Chipkarte 1 implementierte Anwendung geeignet ist.

Fig. 2 zeigt eine Variante für die Ausführung der Chipkarte 1 in einer schematisierten Aufsicht. Auch bei dieser Variante weist die Chipkarte 1 eine Tastatur 6 mit zwölf Tasten 7 auf. Abweichend von Fig. 1 sind die Tastatur 6 und das Kontaktfeld 5 jedoch nicht auf derselben Seite des Kartenkörpers 3 angeordnet, sondern die Tastatur 6 ist auf der relativ zum Kontaktfeld 5 rückwärtigen Seite des Kartenkörpers 3 angeordnet. Da die Tastatur 6 nach dem Einführen der Chipkarte 1 in den Kartenschlitz 9 des Chipkartenlesers 2 zugänglich sein muss, wird die in Fig. 2 dargestellte Chipkarte 1 mit der Tastatur 6 nach oben und folglich mit dem Kontaktfeld 5 nach unten in den Kartenschlitz 9 des Chipkartenlesers 2 eingeführt. Dementsprechend muss in diesem Fall die Kontaktiereinheit 10 so im Chipkartenleser 2 angeordnet sein, dass sie das Kontaktfeld 5 von unten kontaktiert. Um den Chipkartenleser 2 gleichermaßen für beide Ausführungsbeispiele der Chipkarte 1 nutzen zu können, kann er mit je einer Kontaktiereinheit 10 oberhalb und unterhalb der Ebene, in der die Chipkarte 1 angeordnet wird, ausgestattet sein.

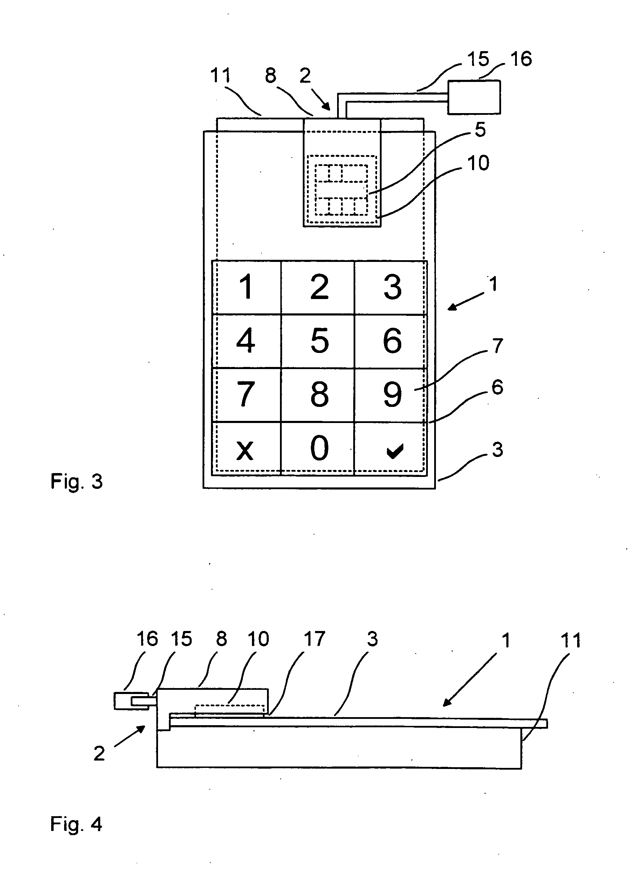

Fig. 3,5 und 6 zeigen weitere Ausführungsbeispiele des erfindungsgemäßen Systems in einer schematisierten Aufsicht. Eine zu Fig. 3 gehörige schematisierte Seitenansicht ist in Fig. 4 dargestellt. Der Chipkartenleser 2 ist jeweils nur in seinen äußeren Umrissen dargestellt, wobei die Kontaktiereinheit 10 symbolisch eingezeichnet ist. Allen Ausführungsbeispielen ist gemeinsam, dass das Stützelement 11 des Chipkartenlesers 2 als eine Kunststoffplatte ausgebildet ist, auf die das Gehäuse 8 aufgesetzt ist. Die Hauptfläche des Stützelements 11 ist jeweils etwas kleiner als die Hauptfläche des Kartenkörpers 3 der Chipkarte 1 ausgebildet, um die Handhabung der Chipkarte 1 zu erleichtern und die Abmessungen des Chipkartenlesers 2 möglichst gering zu halten.

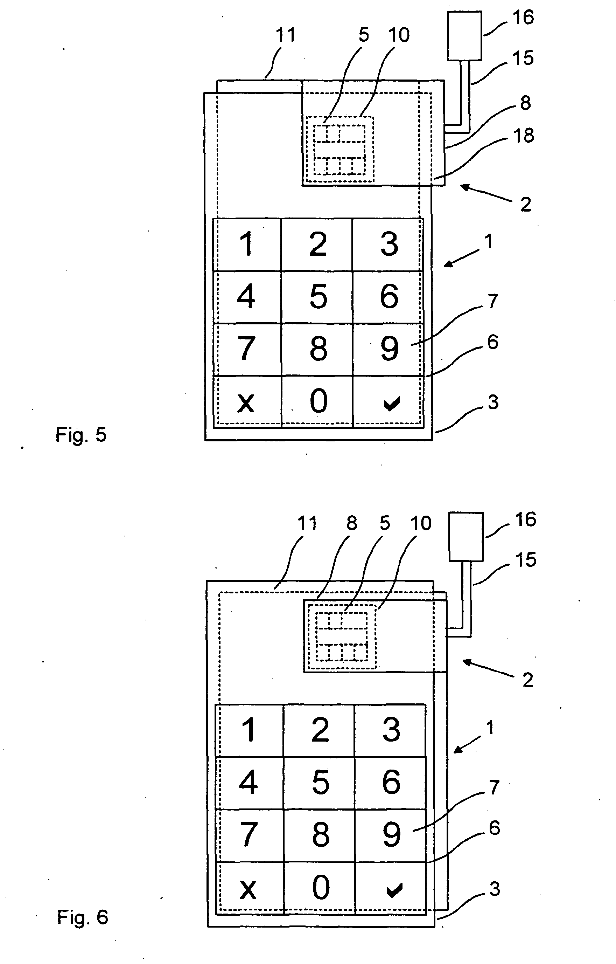

Bei dem in Fig. 3 und 4 dargestellten Ausführungsbeispiel ist das Gehäuse 8 bündig zu einer Schmalseite des Stützelements 11 aufgesetzt und im Bereich der Schmalseite mit dem Stützelement 11 mechanisch verbunden. Von den beiden Längsseiten des Stützelements 11 ist das Gehäuse 8 jeweils so weit entfernt, dass die Position des Gehäuses 8 auf dem Stützelement 11 ungefähr zur Position des Kontaktfeldes 5 der Chipkarte 1 auf dem Kartenkörper 3 korreliert. Außerhalb des Verbindungsbereichs ist zwischen dem Gehäuse 8 und dem Stützelement 11 ein Spalt 17 ausgebildet, der so bemessen ist, dass die Chipkarte 1 in den Spalt 17 eingeführt werden kann. Ein derartiger Spalt 17 zum Einführen der Chipkarte 1 ist auch bei den in Fig. 4 und Fig. 5 dargestellten Ausführungsbeispielen vorgesehen.

Zur Kontaktierung des Kontaktfelds 5 der Chipkarte 1 durch die Kontaktiereinheit 10 des Chipkartenlesers 2 wird die Chipkarte 1 in den Spalt 17 eingeführt, bis sie mit einer Schmalseite am Verbindungsbereich zwischen dem Gehäuse 8 und dem Stützelement 11 anschlägt. Die andere Schmalseite und die beiden Längsseiten der Chipkarte 1 stehen dann jeweils seitlich über das Gehäuse 8 über. Außerdem stehen die beiden Längsseiten der Chipkarte 1 jeweils ungefähr gleich weit über die Längsseiten des Stützelements 11 über. Bei diesem Ausführungsbeispiel kann das Gehäuse 8 des Chipkartenlesers 2 besonders kleine Abmessungen aufweisen.

Bei dem in Fig. 4 dargestellten Ausführungsbeispiel ist das Gehäuse 8 bündig zu einer Schmalseite des Stützelements 11 aufgesetzt und steht geringfügig über eine Längsseite über. In dem überstehenden Bereich ist ein Anschlag 18 für den Kartenkörper 3 der Chipkarte 1 ausgebildet. Die mechanische Verbindung zwischen dem Gehäuse 8 und dem Stützelement 11 ist wiederum im Bereich der Schmalseite des Stützelements 11 ausgebildet. Die Abmessungen des Gehäuses 8 sind so gewählt, dass das Kontaktfeld 5 der Chipkarte 1 vom Gehäuse 8 abgedeckt wird, wenn die Chipkarte 1 ordnungsgemäß in das Gehäuse 8 eingeführt ist. Die ordnungsgemäße Position ist dann erreicht, wenn der Kartenkörper 3 der Chipkarte 1 sowohl an den Verbindungsbereich zwischen dem Gehäuse 8 und dem Stützelement 11 als auch an dem am Gehäuse 8 ausgebildeten Anschlag 18 anschlägt.

Bei dem in Fig. 5 dargestellten Ausführungsbeispiel ist das Gehäuse 8 bündig zu einer Längsseite des Stützelements 11 aufgesetzt und dort mit dem Stützelement 11 verbunden. Die andere Längsseite und die beiden Schmalseiten des Stützelements 11 stehen jeweils seitlich über das Gehäuse 8 über. Dementsprechend steht auch die ordnungsgemäß in den Spalt 17 zwischen dem Gehäuse 8 und dem Stützelement 11 eingeführte Chipkarte 1 mit ihren beiden Schmalseiten und einer Längsseite über das Gehäuse 8 über.

Bei allen Ausführungsbeispielen des erfindungsgemäßen Systems können die Chipkarte 1 und/oder der Chipkartenleser 2 mit mechanischen oder optischen Positionierhilfen ausgestattet sein, die ein korrektes Positionieren der Chipkarte 1 im Chipkartenleser 2 erleichtern.

Mit dem erfindungsgemäßen System können nicht nur Transaktionen im Rahmen des Homebanking durchgeführt werden, sondern beliebige Transaktionen des bargeldlosen Zahlungsverkehrs. Ebenso eignet sich das erfindungsgemäße System zum Beispiel auch zur Durchführung von Ver- und Entschlüsselungsvorgängen, von Sigruervorgängen oder von beliebigen mit der Chipkarte 1 gesicherten Transaktionen.

## Patentansprüche

1. System mit einem tragbaren Datenträger (1) und einem Endgerät (2) wobei
- der tragbare Datenträger (1) eine elektronische Schaltung (4) zur Speicherung und/oder Verarbeitung von Daten und eine Eingabevorrichtung (6) zur Eingabe von für die Durchführung einer Anwendung erforderlichen Daten durch einen Benutzer aufweist,
- das Endgerät (2) eine Signaleinrichtung (12,13,14) zur Erzeugung eines vom Benutzer wahrnehmbaren Signals aufweist,
- der tragbare Datenträger (1) und das Endgerät (2) aufeinander abgestimmte Koppeleinrichtungen (5, 10) aufweisen,
- über das Endgerät (2) eine Datenverbindung zwischen dem tragbaren Datenträger (1) und einem weiteren Gerät ausgebildet ist, und
- der tragbare Datenträger (1) für die Durchführung einer mit dem tragbaren Datenträger (1) gesicherten Anwendung über die Koppelvorrichtungen (5, 10) mit dem Endgerät (2) verbunden ist,
**dadurch gekennzeichnet, dass** es sich bei dem tragbaren Datenträger (1) um eine Chipkarte und bei dem Endgerät (2) um einen Chipkartenleser handelt, und der Chipkartenleser (2) dazu eingerichtet ist, bei jeder Betätigung der Eingabevorrichtung (6) der Chipkarte (1) über die Signaleinrichtung (12,13,14) ein Signal zu erzeugen, das die erfolgte Betätigung der Eingabevorrichtung (6) quittiert.

2. System nach Anspruch 1, **dadurch gekennzeichnet, dass** in dem von der Signaleinrichtung (12, 13, 14) des Chipkartenlesers (2) erzeugten Signal die bei der zugehörigen Betätigung der Eingabevorrichtung (6) der Chipkarte (1) eingegebene Information nicht enthalten ist.

3. System nach einem der vorhergehenden Ansprüche, **dadurch gekennzeichnet, dass** die Koppeleinrichtung (5) der Chipkarte (1) als ein Kontaktfeld ausgebildet ist.

4. System nach einem der vorhergehenden Ansprüche, **dadurch gekennzeichnet, dass** die Eingabevorrichtung (6) der Chipkarte (1) als eine Tastatur ausgebildet ist.

5. System nach einem der vorhergehenden Ansprüche, **dadurch gekennzeichnet, dass** mit der Chipkarte (1) eine Datenübertragung gemäß dem USB-Standard durchführbar ist.

6. System nach einem der vorhergehenden Ansprüche, **dadurch gekennzeichnet, dass** die Chipkarte (1) als eine Chipkarte gemäß den Normen ISO 7810 und ISO/ IEC 7816 ausgebildet ist.

7. System nach einem der vorhergehenden Ansprüche, **dadurch gekennzeichnet, dass** die Koppeleinrichtung (10) des Chipkartenlesers (2) als eine Kontaktiereinheit zur berührenden Kontaktierung ausgebildet ist.

8. System nach einem der vorhergehenden Ansprüche, **dadurch gekennzeichnet, dass** der Chipkartenleser (2) ein Anschlusselement (16), insbesondere einen USB-Stecker, zur Ausbildung der Datenverbindung mit dem weiteren Gerät aufweist.

9. System nach einem der vorhergehenden Ansprüche, **dadurch gekennzeichnet, dass** die Signaleinrichtung (12, 13, 14) des Chipkartenlesers (2) ein optisch, akustisch oder taktil wahrnehmbares Signal erzeugt.

10. System nach einem der vorhergehenden Ansprüche, **dadurch gekennzeichnet, dass** der Chipkartenleser (2) ein Stützelement (11) zum Abstützen der Chipkarte (1) im Bereich der Eingabevorrichtung (6) aufweist.

11. Verfahren zum Ausführen einer gesicherten Anwendung mit Hilfe eines tragbaren Datenträgers (1), welcher über eine Eingabevorrichtung (6) zur Eingabe von Daten durch einen Benutzer sowie über eine Koppeleinrichtung (5) verfügt,
wobei ein Endgerät (2) bereitgestellt wird, das über eine auf die Koppeleinrichtung (5) abgestimmte Koppelvorrichtung (10) sowie eine Signaleinrichtung (12,13,14) zur Erzeugung eines vorn Benutzer wahmehmbaren Signals verfügt und über das Endgerät (2) eine Datenverbindung zwischen dem tragbaren Datenträger (1) und einem weiteren Gerät ausgebildet wird, wobei der tragbare Datenträger (1) an das Endgerät (2) angenähert oder in dieses eingeführt wird, so dass über die Koppelvorrichtungen (5,10) eine Verbindung zwischen tragbarem Datenträger (1) und Endgerät (2) hergestellt wird, wobei von einem Benutzer durch Betätigung der Eingabevorrichtung (6) des tragbaren Datenträgers (1) Daten eingegeben werden, die für die Durchführung der gesicherten Anwendung erforderlich sind, **dadurch gekennzeichnet, dass** es sich bei dem tragbaren Datenträger (1) um eine Chipkarte und bei dem Endgerät (2) um einen Chipkartenleser handelt, und bei jeder Betätigung der Eingabevorrichtung (6) von der Signaleinrichtung (12,13,14) des Chipkartenlesers (2) ein Signal erzeugt wird, durch das die Betätigung der Eingabevorrichtung (6) quittiert wird.

## Claims

1. A system having a portable data carrier (1) and an end device (2), wherein
- the portable data carrier (1) has an electronic circuit (4) for storing and/or processing data, and an input apparatus (6) for a user to input data necessary for carrying out an application,
- the end device (2) has a signal device (12, 13, 14) for generating a signal perceptible to the user,
- the portable data carrier (1) and the end device (2) have mutually coordinated coupling devices (5, 10),
- via the end device (2) there is formed a data connection between the portable data carrier (1) and a further device, and
- the portable data carrier (1) is connected to the end device (2) via the coupling apparatuses (5, 10) for the carrying out of an application secured with the portable data carrier (1),
**characterized in that**
the portable data carrier (1) is a chip card, and the end device (2) is a chip-card reader, and
the chip-card reader (2) is adapted to generate via the signal device (12, 13, 14), upon each actuation of the input apparatus (6) of the chip card (1), a signal which acknowledges the effected actuation of the input apparatus (6).

2. The system according to claim 1, **characterized in that** in the signal generated by the signal device (12, 13, 14) of the chip-card reader (2) there is not contained the information that is input upon the associated actuation of the input apparatus (6) of the chip card (1).

3. The system according to either of the previous claims, **characterized in that** the coupling device (5) of the chip card (1) is configured as a contact pad.

4. The system according to any of the previous claims, **characterized in that** the input apparatus (6) of the chip card (1) is configured as a keyboard.

5. The system according to any of the previous claims, **characterized in that** there can be carried out with the chip card (1) a data transfer according to the USB standard.

6. The system according to any of the previous claims, **characterized in that** the chip card (1) is configured as a chip card according to the standards ISO 7810 and ISO/IEC 7816.

7. The system according to any of the previous claims, **characterized in that** the coupling device (10) of the chip-card reader (2) is configured as a contacting unit for touching-type contacting.

8. The system according to any of the previous claims, **characterized in that** the chip-card reader (2) has an attachment element (16), in particular a USB plug, for forming the data connection to the further device.

9. The system according to any of the previous claims, **characterized in that** the signal device (12, 13, 14) of the chip-card reader (2) generates an optically, acoustically or tactilely perceptible signal.

10. The system according to any of the previous claims, **characterized in that** the chip-card reader (2) has a support element (11) for supporting the chip card (1) in the area of the input apparatus (6).

11. A method for executing a secured application using a portable data carrier (1) which has an input apparatus (6) for a user to input data, and a coupling device (5),
wherein there is provided an end device (2) which has a coupling apparatus (10) coordinated with the coupling device (5), and a signal device (12, 13, 14) for generating a signal perceptible to the user,
and via the end device (2) there is formed a data connection between the portable data carrier (1) and a further device,
whereby the portable data carrier (1) is brought close to the end device (2) or introduced thereinto,
so that via the coupling apparatuses (5, 10) there is established a connection between portable data carrier (1) and end device (2),
wherein there are input by a user through actuation of the input apparatus (6) of the portable data carrier (1) data which are necessary for carrying out the secured application,
**characterized in that**
the portable data carrier (1) is a chip card, and the end device (2) is a chip-card reader, and
upon each actuation of the input apparatus (6) there is generated by the signal device (12, 13, 14) of the chip-card reader (2) a signal through which the actuation of the input apparatus (6) is acknowledged.

## Revendications

1. Système comprenant un support de données portable (1) et un terminal (2),
- le support de données portable (1) comportant un circuit électronique (4) pour la mémorisation et/ou le traitement de données et un dispositif d'entrée (6) pour l'entrée par un usager de données requises pour l'exécution d'une application,
- le terminal (2) comportant un équipement de signalisation (12, 13, 14) pour la génération d'un signal perceptible par l'usager,
- le support de données portable (1) et le terminal (2) comportant des équipements de couplage (5, 10) accordés entre eux,
- une connexion de données entre le support de données portable (1) et un autre appareil étant établie par l'intermédiaire du terminal (2), et
- le support de données portable (1) étant connecté au terminal (2) par l'intermédiaire des équipements de couplage (5, 10) pour l'exécution d'une application sécurisée avec le support de données portable (1), **caractérisé en ce que**
le support de données portable (1) consiste en une carte à puce et **en ce que** le terminal (2) consiste en un lecteur de carte à puce , et
**en ce que** le lecteur de carte à puce (2) est configuré pour générer par l'intermédiaire de l'équipement de signalisation (12, 13, 14) à chaque actionnement de l'équipement d'entrée (6) de la carte à puce (1) un signal qui acquitte l'actionnement effectué de l'équipement d'entrée (6).

2. Système selon la revendication 1, **caractérisé en ce que** le signal généré par l'équipement de signalisation (12, 13, 14) du lecteur de carte à puce (2) ne renferme pas l'information introduite lors de l'actionnement correspondant de l'équipement d'entrée (6) de la carte à puce (1).

3. Système selon une des revendications précédentes, **caractérisé en ce que** l'équipement de couplage (5) de la carte à puce (1) est réalisé en tant qu'un champ de contact.

4. Système selon une des revendications précédentes, **caractérisé en ce que** l'équipement d'entrée (6) de la carte à puce (1) est réalisé en tant qu'un clavier.

5. Système selon une des revendications précédentes, **caractérisé en ce qu'**une transmission de données selon le standard USB est exécutable avec la carte à puce (1).

6. Système selon une des revendications précédentes, **caractérisé en ce que** la carte à puce (1) est réalisée en tant qu'une carte à puce selon les normes ISO 7810 et ISO/IEC 7816.

7. Système selon une des revendications précédentes, **caractérisé en ce que** l'équipement de couplage (10) du lecteur de carte à puce (2) est réalisé en tant qu'une unité de mise en contact destinée à la mise en contact avec attouchement.

8. Système selon une des revendications précédentes, **caractérisé en ce que** le lecteur de carte à puce (2) comporte un élément de raccordement (16), notamment une prise USB, pour l'établissement de la connexion de données avec l'autre appareil.

9. Système selon une des revendications précédentes, **caractérisé en ce que** l'équipement de signalisation (12, 13, 14) du lecteur de carte à puce (2) génère une signal perceptible optiquement, acoustiquement ou tactilement.

10. Système selon une des revendications précédentes, **caractérisé en ce que** le lecteur de carte à puce (2) comporte un élément d'appui (11) pour l'appui de la carte à puce (1) dans la zone de l'équipement d'entrée (6).

11. Procédé d'exécution d'une application sécurisée à l'aide d'un support de données portable (1), lequel dispose d'un équipement d'entrée (6) pour l'entrée de données par un usager ainsi que d'un équipement de couplage (5)
un terminal (2) étant mis à disposition, ce dernier étant muni d'un dispositif de couplage (10) accordé à l'équipement de couplage (5) ainsi que d'un équipement de signalisation (12, 13, 14) pour la génération d'un signal perceptible par l'usager
et une connexion de données entre le support de données portable (1) et un autre appareil étant établie par l'intermédiaire du terminal (2),
le support de données portable (1) étant rapproché du terminal (2) ou introduit dans ce dernier,
de telle manière qu'une connexion entre support de données portable (1) et terminal (2) est établie par l'intermédiaire des dispositifs de couplage (5, 10),
des données nécessaires à l'exécution de l'application sécurisée étant entrées par un usager par actionnement de l'équipement d'entrée (6) du support de données portable (1),
**caractérisé en ce que**
le support de données portable (1) consiste en une carte à puce et **en ce que** le terminal (2) consiste en un lecteur de carte à puce , et
**en ce que**, à chaque actionnement du dispositif d'entrée (6), un signal par lequel l'actionnement du dispositif d'entrée (6) est acquitté est généré par l'équipement de signalisation (12, 13, 14) du lecteur de carte à puce (2).
